# EUROPÄISCHE PATENTSCHRIFT

(11) **EP 3 553 335 B1**
(45) Veröffentlichungstag und Bekanntmachung des Hinweises auf die Patenterteilung: **31.05.2023**
(21) Anmeldenummer: 19000161.0
(22) Anmeldetag: 01.04.2019
(51) Int. Cl.: F15B 13/02

(54) **MEDIUMSVERSORGUNGSSYSTEM**
MEDIUM SUPPLY SYSTEM
SYSTÈME D'ALIMENTATION EN FLUIDES

(30) Priorität: 11.04.2018 DE 102018002950
(43) Veröffentlichungstag der Anmeldung: 16.10.2019
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 1 816 361
- DE-U1- 7 914 156
- JP-A- S6 145 110
- US-A1- 2006 124 864
- US-A1- 2008 062 388

## Beschreibung

Die Erfindung betrifft ein Mediumsversorgungssystem mit mindestens einem ortsfest gelagerten, ein gasförmiges oder flüssiges Medium führendes Hohlprofil und einem schienengeführten mit einem Mediumsabnehmer ausgestatteten Transportwagen.

Aus der DE 21 60 285 A1 ist eine Luftzuführung an einer Transporteinrichtung für auf Luftkissen fortbewegbare Lastträger bekannt. Die Luftzuführung ist ein langgestrecktes Rohr, das einen Längsschlitz aufweist. Der Längsschlitz ist von der Rohrinnenseite aus mit einer den Längsschlitz abdeckenden Ventilmembrane verschlossen. An der Rohraußenseite liegt über einen kurzen Teil des Längsschlitzes ein Luftabgriff an. Innerhalb des Luftabgriffs liegt an der Ventilmembrane eine Nocke an, die die Ventilmembrane vom Längsschlitz abhebt, sodass aus dem Rohr in den Luftabgriff Druckluft übertritt.

Die EP 1 816 361 A1 beschreibt zwei luftgelagerte Kreuzschlitten einer Vorrichtung zur Herstellung von mittels eines Elektronenstrahls lithographisch erzeugten Mustern. Jeder Schlitten des einzelnen Kreuzschlittens hat als Festlager die Form eines Vierkantrohrs, das eine vierkantförmige Führungsschiene umgreift. Gegen die Führungsschiene stützt sich der Vierkantrohrschlitten über mehrere Luftlager ab. Entlang der hohlen, druckluftführenden Führungsschiene befindet sich eine Vielzahl von differenzdruckgesteuerten Vorsteuerventilen. Der entlang der Führungsschiene gleitende Vierkantrohrschlitten entnimmt beim Überfahren der Vorsteuerventile die Druckluft für seine Luftlager.

Aus der DE 79 14 156 U1 ist ein Mediumsversorgungssystem gemäß dem Oberbegriff des Anspruchs 1 bekannt, welches eine Lineareinheit mit beweglichen Druckluftabnehmern zeigt.

Die Lineareinheit besteht aus einem Zylinder oder einem Linearantrieb wie Motor und Kugelgewindestange oder Gewindestange mit Mutterelement, einer parallel zu diesen angeordneten Luftschiene, die auf ihrer ganzen Länge Zapfstellen enthält, die in kurzen Abständen angeordnet sind und einem auf geeigneten Führungsleisten der Luftschiene verschiebbaren Druckluftabnehmer.

Der vorliegenden Erfindung liegt die Problemstellung zugrunde, ein Mediumsversorgungssystem für einen oder mehrere schienengeführte Transportwagen für Werkstücke zu schaffen, mit dem die Transportwagen zumindest auf einem Teil ihrer Fahrstrecke mit einem gasförmigen oder flüssigen Medium sicher und ohne Leckage versorgbar sind.

Diese Problemstellung wird mit den Merkmalen des Hauptanspruchs gelöst. Dabei ist der am Hohlprofil zumindest bereichsweise anliegende Mediumsabnehmer an diesem sicher und ohne Leckage versorgbar entlangführbar. Zwischen dem Mediumsabnehmer und dem Hohlprofil ist ein geschlossener Übertragungshohlraum vorhanden. Der Mediumsabnehmer hat ein den Querschnitt des Hohlprofils umgebendes den Übertragungshohlraum aufnehmendes Übernahmegehäuse, das an seinen vom Hohlprofil durchdrungenen Stirnseiten gleitfähig mediumsdicht verschlossen ist. Der Mediumsabnehmer übernimmt das im Hohlprofil vorhandene Medium über im Hohlprofil angeordnete Ventile. In den Übertragungshohlraum des Mediumsabnehmers mündet die Öffnung mindestens eines Ventils. Das jeweils vom Mediumsabnehmer überfahrene Ventil ist magnetisch ausgelöst öffenbar. Das überfahrene, geöffnete Ventil ist beim Verlassen des Übertragungshohlraums mechanisch, pneumatisch oder magnetisch ausgelöst schließbar.

Mit der Erfindung wird ein Mediumsversorgungssystem geschaffen, mit dem z.B. schienengeführte Transportwagen mit einem gasförmigen oder flüssigen Medium versorgt werden können, ohne dass der einzelne Trasportwagen einen Versorgungsschlauch hinter sich her ziehen muss. Dazu wird entlang dem Transportweg der Transportwagen, zumindest bereichsweise, ein das Medium führendes Hohlprofil angeordnet, an dem der Mediumsabnehmer entlanggeführt wird. Im Hohlprofil sind dazu viele Ventile in der Regel hintereinander mit kleineren oder größeren Abständen angeordnet. Die Ventile, die außerhalb des Mediumsabnehmers generell geschlossen sind, bilden eine Übergabespur. Der vom einzelnen Transportwagen geführte Mediumsabnehmer, z.B. eine Art von Gleitschuh, gleitet abgedichtet auf dem Hohlprofil entlang der Übergabespur. Innerhalb des Mediumsabnehmers wird das jeweils überfahrene Ventil geöffnet, um das im Hohlprofil geführte Medium an den Mediumsabnehmer zu übergeben, der dann das Medium an den Transportwagen weiterleitet. In der Regel erfolgt die Mediumsübergabe bei stehendem Transportwagen. Der Abstand der Ventile entlang der Übergabespur ist dabei so gewählt, dass der Innenraum des Mediumsabnehmers mindestens drei Ventile überdeckt. Das Medium selbst ist dabei u.a. ein beliebiges Druckgas, Druckluft, Vakuum, Wasser oder Hydrauliköl.

Ist eine Mediumsübergabe bei fahrenden Transportwagen vorgesehen, wird der Abstand der im Hohlprofil angeordneten Ventile und die Länge des Mediumsabnehmers jeweils so ausgelegt, dass, angepasst an die Geschwindigkeit der sie überfahrenden Transportwagen, die Ventile genügend Zeit haben, um zu offen, ein ausreichendes Mediumsvolumen - z.B. zur Druckerhaltung - zu übergeben und wieder zu schließen. Bei komprimierbaren Medien kann zudem der Transportwagen oder der Mediumsabnehmer mit einem Mediumsspeicher ausgestattet werden.

Selbstverständlich kann das Hohlprofil auch nur entlang eines Teils des gesamten Transportweges der Transportwagen verlegt sein. In diesem Fall ist das Hohlprofil auf Stelzen oder Kragarme gelagert, die nicht nur die Hohlprofilgewichtskraft tragen und die Mediumsversorgung des Hohlprofils gewährleisten, sondern die auch jeweils einem heranfahrenden Transportwagen - unter Abkuppeln der Mediumsversorgung - temporär ausweichen, ohne dabei die ortsfeste Lage des Hohlprofils zu ändern.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht eines Mediumführprofils für Vakuum mit Mediumsabnehmer und außensitzender Verschlusskappe;
- Figur 2:: Teillängsschnitt zu Figur 1;
- Figur 3:: Querschnitt durch den Mediumsabnehmer, das Mediumführprofil und ein Saugventil nach Figur 1;
- Figur 4:: Längsschnitt durch das offene Saugventil nach Figur 3;
- Figur 5:: perspektivische Ansicht des Vakuumventilglieds;
- Figur 6:: Längsschnitt durch eine innensitzende Verschlusskappe;
- Figur 7:: perspektivische Ansicht eines Mediumführprofils für Druckluft mit Mediumsabnehmer;
- Figur 8:: Teillängsschnitt zu Figur 7;
- Figur 9:: Querschnitt durch den Mediumsabnehmer nach Figur 7;
- Figur 10:: Längsschnitt durch das Druckventil nach Figur 9;
- Figur 11:: Explosionsansicht des Druckventilgehäuses nach Figur 10;
- Figur 12:: Explosionsansicht des Druckventilglieds nach Figur 10;
- Figur 13:: Seitenansicht des Mediumsversorgungssystems mit einfahrendem Mediumsabnehmer;
- Figur 14:: wie Figur 13, jedoch mit durchfahrendem Mediumsabnehmer;
- Figur 15:: wie Figur 13, jedoch mit ausfahrendem Mediumsabnehmer.

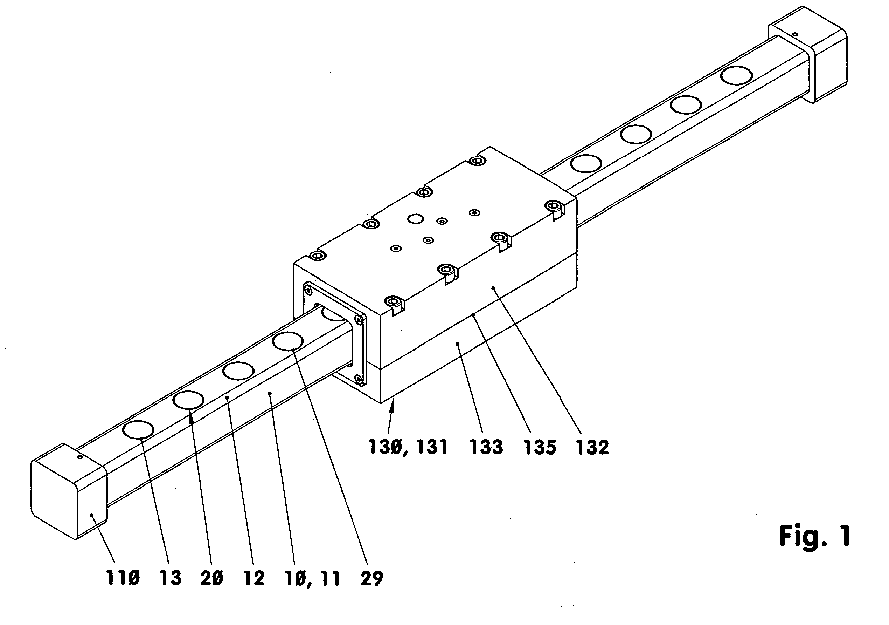

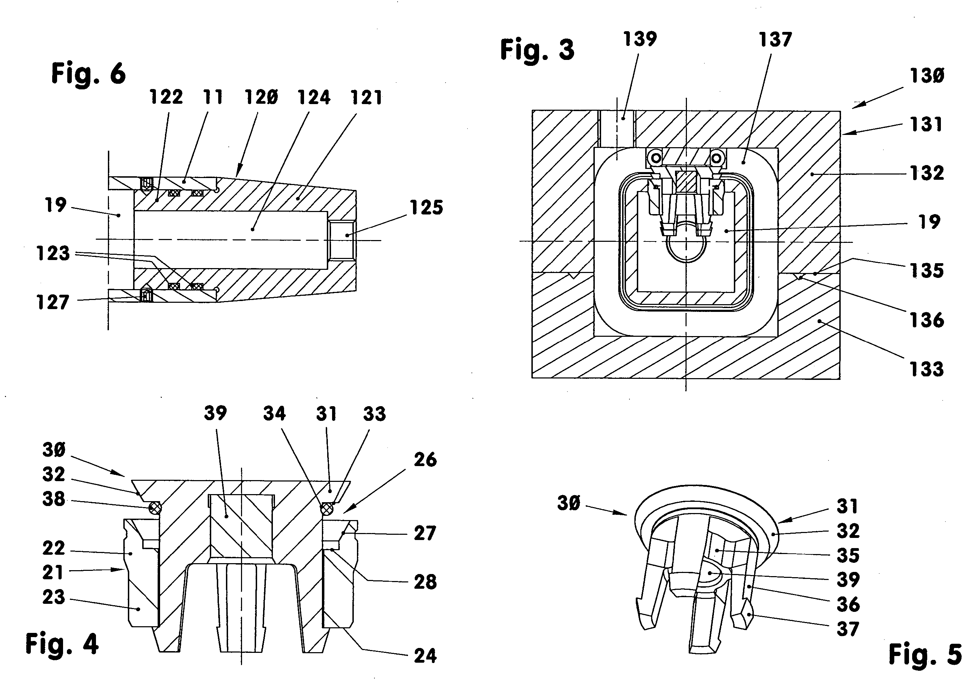

Die Figuren 1 und 6 zeigen jeweils eine perspektivische Ansicht eines Mediumsversorgungssystems, das zur Versorgung von schienengeführten Transportwagen mit gasförmigen oder flüssigen Medien geeignet ist. Der einzelne Transportwagen ist dazu mit einem Mediumsabnehmer (130) ausgestattet, der während der Transportwagenbewegung an einem Hohlprofil (10, 40) anlegbar ist. Das Hohlprofil (10, 40) führt in seinem Innenraum (19) das gasförmige oder flüssige Medium (1), das vom Mediumsabnehmer (130) aus einzelnen Aggregaten des Transportwagens zugeführt wird. Ein solches Aggregat ist beispielsweise ein Parallelgreifer, ein ausfahrbarer Anschlag oder die Schwenkeinrichtung eines Messtasters.

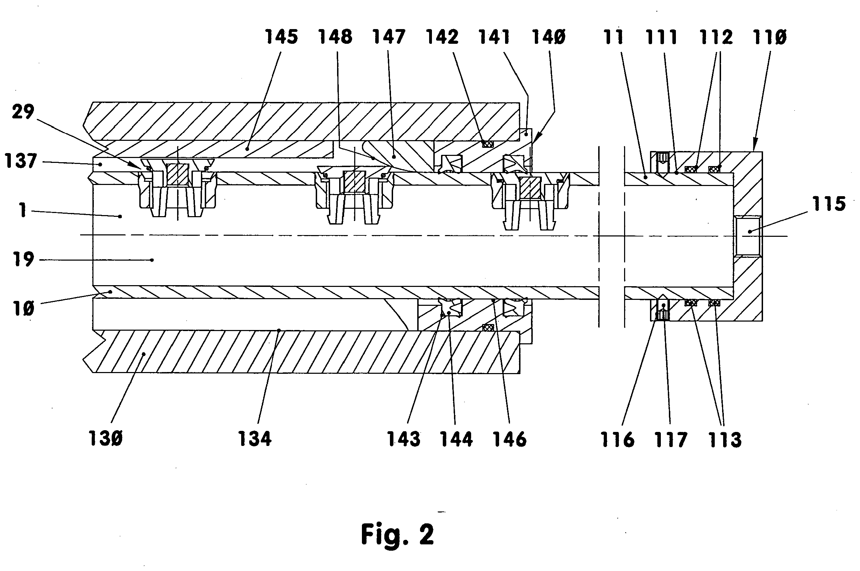

Die Figur 2 zeigt einen Längsschnitt durch das Hohlprofil (10) und den Mediumsabnehmer (130) eines Mediumsversorgungssystems, das an einem Transportwagen einen Vakuumanschluss ermöglicht. Das Hohlprofil (10) ist hier ein aus einer Aluminiumlegierung gefertigtes Stranggussprofil in Form eines Vierkantrohrs (11), das einen im Wesentlichen quadratischen Querschnitt aufweist. Es hat beispielsweise bei einer Querschnittskantenlänge von 30 mm eine Wandstärke, die einem Zehntel bis einem Viertel dieser Querschnittskantenlänge entspricht. Die Längskanten (12) des Vierkantrohres (11), vgl. Figur 1, sind mit einem Radius von z.B. 4 mm abgerundet.

Das Vierkantrohr (11) ist an seinen freien Enden mit einer Stirnfläche versehen, deren Ebene normal zur Vierkantrohrlängsausrichtung orientiert ist. Auf das jeweilige Ende des Vierkantrohres (11) ist eine topfförmige, außensitzende Verschlusskappe (110) montiert. Die Verschlusskappe (110) hat eine im Wesentlichen quaderförmige Kappenausnehmung (111). Ihr Boden liegt an der Stirnfläche des Vierkantrohres (11) an. Im Zentrum des Bodens ist ein zentraler Mediumsanschluss (115) in Form einer Durchgangsgewindebohrung angeordnet, über den u.a. das Vakuum am Vierkantrohr (11) ansteht.

In mindestens zwei einander gegenüberliegenden Seitenwandungen der Verschlusskappe (110) ist jeweils in Kappenrandnähe mittig eine Gewindebohrung (116), z.B. M3, angeordnet, in der ein Gewindestift (117) mit Spitze nach DIN 914 eingeschraubt ist. Zwischen der Gewindebohrung (116) und dem Boden sind in der Innenwandung der Kappenausnehmung (111) zwei nebeneinander angeordnete O-Ringnuten (112) eingearbeitet. In den O-Ringnuten (112) sind O-Ringe (113) oder vergleichbare Dichtmittel eingelegt.

Damit die Verschlusskappe (110) formschlüssig auf dem Hohlprofilende hält, befindet sich bei aufgesteckter Verschlusskappe (110) in der Verlängerung der Gewindebohrungen (116) eine Kegelsenkung in der Vierkantrohraußenwandung, in die die Spitze des jeweiligen Gewindestifts (117) - nach der Fixierung der Verschlusskappe (110) - hineinragt.

Alternativ zu der außensitzenden Verschlusskappe (110) kann auch eine in Figur 6 dargestellte innensitzende Überfahrkappe (120) verwendet werden. Die Überfahrkappe (120) besteht aus einem Pyramidenstumpfbereich (121) und einem Sitzbereich (122). Der Sitzbereich (122) ragt z.B. 20 mm in den Innenraum (19) des Vierkantrohres (11) hinein, während der Pyramidenstumpfbereich (121) eine sich verjüngende Verlängerung des Vierkantrohres (11) darstellt. Der Pyramidenstumpfbereich (121) hat eine Fußkontur, die der äußeren Umlaufkante des Vierkantrohres (11) entspricht. Er ist bei einem Pyramidenspitzenwinkel von zehn Winkelgraden z.B. 34,4 mm lang. Dabei verjüngt er sich - von der Fußkontur ausgehend - hin zum freien Ende der Überfahrkappe (120). In der Stirnfläche des freien Endes ist eine Gewindebohrung als Mediumsanschluss (125) angeordnet.

Die Befestigung und Abdichtung der Überfahrkappe (120) am Vierkantrohr (11) erfolgt in vergleichbarer Weise wie bei der Verschlusskappe (110) nach Figur 2. Allerdings können hier die Gewindestifte (127) durch Passstifte ersetzt werden, wobei die außenliegenden Stirnflächen der Passstifte - zur Schonung der Mediumsabnehmerdichtungen - in der Ebene der jeweiligen Außenwandung des Vierkantrohres (11) liegen.

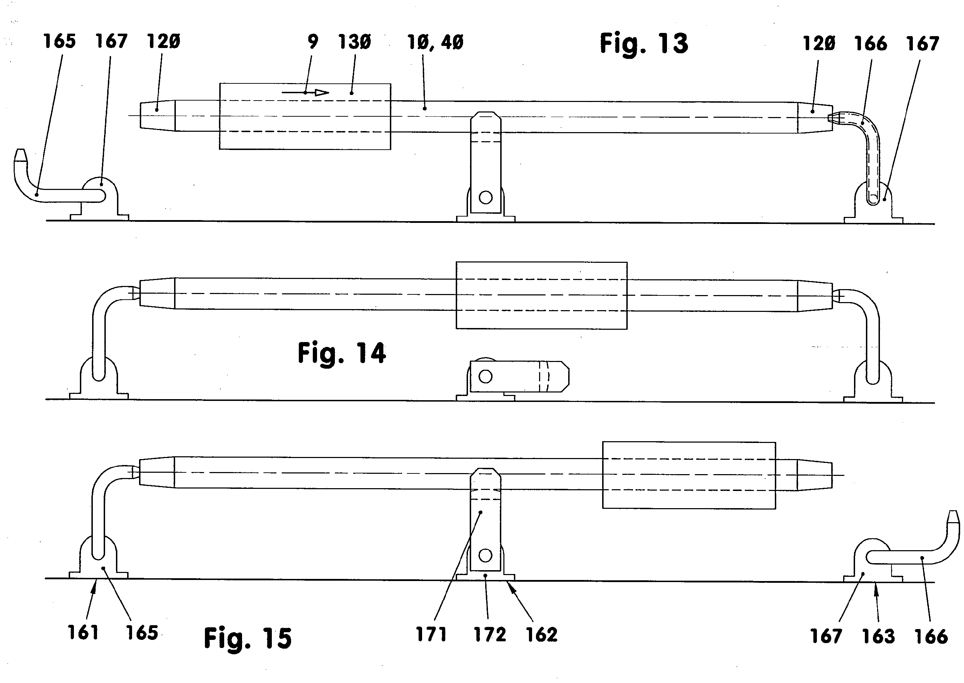

Mit der Überfahrkappe (120) wird ein Hohlprofilabschluss geschaffen, auf den die Mediumsabnehmer (130) auffahren können. Mit Hilfe der rampenartigen Außenkontur der Überfahrkappe (120) werden die Dichtungen des Mediumsabnehmers (130) beim Auffahren - ohne zusätzlichen Verschleiß und zu großen Kraftaufwand - aufgeweitet, vgl. Figuren 13 bis 15.

Gemäß den Figuren 1 und 2 ist in einer Seitenwandung des Vierkantrohres (11) in äquidistanten Abständen eine Vielzahl von Ventileinbaubohrungen (13) hintereinander angeordnet. Alle Ventileinbaubohrungen (13) haben im Ausführungsbeispiel Mittellinien, die in einer Ebene liegen. In dieser Ebene befindet sich auch die Mittellinie des Vierkantrohres (11). In den Ventileinbaubohrungen (13) sitzen Saugventile (20), deren freie Stirnfläche oder Stirnflächen in der Außenwandungsebene des Vierkantrohres (11) liegen, in der die Ventileinbaubohrungen (13) eingearbeitet sind.

Im Gegensatz zum Ausführungsbeispiel können die Ventileinbaubohrungen auch schraubenförmig entlang der Vierkantrohraußenwandung angeordnet sein, so dass z.B. jede Vierkantrohraußenwandung nur ein Viertel der Ventileinbaubohrungen aufweist. Das reduziert bzw. verteilt den Verschleiß der Mediumsabnehmerdichtungen. Auch ist es möglich, die Ventileinbaubohrungen (13) auf der einzelnen Vierkantrohraußenwandung seitlich versetzt hintereinander anzuordnen.

Selbstverständlich kann das Hohlprofil auch ein zylindrisches Rohr, ein Rechteckrohr oder ein anderes Vielkantrohr sein. Ferner kann das Hohlprofil im Innenraum durch eine oder mehrere Zwischenwände in Hohlprofillängsrichtung unterteilt sein, so dass gegeneinander abgetrennte mediumsführende Zonen entstehen.

Das einzelne in eine Ventileinbaubohrung (13) einzusetzende Saugventil (20) besteht aus einer Ventilsitzhülse (21) und einem Vakuumventilglied (30), vgl. Figur 4. Die im Wesentlichen rohrförmige Ventilsitzhülse (21) umfasst einen Befestigungsbereich (22) und einen Führungsbereich (23). Sie hat bei einer Länge von 8,5 mm im Befestigungsbereich (22) z.B. einen Durchmesser von 19 mm. Der 3,2 mm breite Befestigungsbereich (22) hat ca. mittig eine umlaufende Ringnut, deren Tiefe z.B. 0,2 mm misst. Die Ausnehmung der Ventilsitzhülse (21) hat im Befestigungsbereich (22) als Innenwandung eine Konusfläche (27), deren größter Durchmesser 17,85 mm misst und deren Spitzenwinkel einen Winkel von 60 Winkelgraden einschließt. Die Tiefe der Konusfläche (27) entspricht ca. 53 % der Wandstärke des Vierkantrohres (11). An die Konusfläche (27) schließt eine 0,7 mm tiefe Zylindersenkung an. Die plane Bodenfläche der Zylindersenkungen dient als Sitzdichtfläche (28) für einen am Vakuumventilglied (30) sitzenden O-Ring (38). An die Sitzdichtfläche (28) schließt sich eine zylindrische Durchgangsbohrung an, die am unteren Ende des Führungsbereichs (23) in einer planen Haltestirnfläche (24) endet. Der Führungsbereich (23) hat einen Außendurchmesser von z.B. 18,3 mm. Der Übergangsbereich zwischen dem Führungsbereich (23) und dem Befestigungsbereich (22) hat die Form eines geraden Kegelstumpfmantels, dessen Kegelwinkel bei 40 Winkelgraden liegt.

In Figur 4 ist das Vakuumventilglied (30) in seiner geöffneten Position dargestellt. Es sitzt mit einem radialen Spiel von z.B. 0,14 mm in der Ausnehmung (26) der Ventilsitzhülse (21). Der maximale Öffnungshub misst 3,1 mm.

Das Vakuumventilglied (30) besteht aus einem Ventilteller (31), z.B. vier Führungselementen (36) und einer zentralen Magnethaltebüchse (35), vgl. Figur 5. Am Ventilteller (31) ist die Magnethaltebüchse (35) zusammen mit den vier Führungselementen (36) angeformt. Der Ventilteller (31) ist eine plane Scheibe, die eine Wandstärke von 1,7 mm aufweist. Seine plane Unterseite bildet die Glieddichtfläche (33). Er hat eine Außenwandung in Form einer konischen Zentrierfläche (32), deren Kegelwinkel 60 Winkelgrade einschließt. An den Ventilteller (31) schließt sich ein 1,1 mm starker zylindrischer Absatz an, der einen Maximaldurchmesser von z.B. 13,3 mm hat. Im mittleren Bereich hat der Absatz eine Umlaufnut (34), in der ein O-Ring (38) eingelegt ist. Am Absatz sind z.B. vier äquidistant geteilte, z.B. 10,8 mm lange Führungselemente (36) angeordnet, die im Bereich ihres freien Endes in Hintergriffshaken (37) enden. Die Führungselemente (36) liegen mit Spiel an der Ausnehmung (26) der Ventilsitzhülse (21) an. Ihre Hintergriffshaken (37) liegen bei geöffnetem Saugventil (20) flächig auf der Haltestirnfläche (24) der Ventilsitzhülse (21) an.

Die Führungselemente (36) umfassen die zentrale, z.B. 3,8 mm lange Magnethaltebüchse (35). Letztere weist eine zentrale Bohrung auf, in der ein z.B. 5 mm langer Saugventilmagnet (39) angeordnet ist, vgl. Figur 5. Der Saugventilmagnet (39) hat einen Durchmesser von z.B. 5 mm. Er ist in die Magnethaltebüchse (35) eingeklebt oder dort verklemmt. Der Ventilteller (31) hat im Bereich des Saugventilmagneten (39) eine Wandstärke von 0,4 bis 1,1 mm. Mit abnehmender Wandstärke des Ventiltellers (31) nimmt die Ventilöffnungskraft zu.

Die Führungselemente (36) sind so elastisch, dass das Vakuumventilglied (30) trotz der nach außen ragenden Hintergriffshaken (37) ohne plastische Verformung in die Ventilsitzhülse (21) eingeschoben werden kann.

Bei geschlossenem Saugventil (20) liegt der Ventilteller (31) mit seiner Zentrierfläche (32) auf der Konusfläche (27) der Ventilsitzhülse (21) auf. Der O-Ring (38) dichtet dabei das Hohlprofil (10) gegenüber der Umgebung zwischen der Sitzdichtfläche (28) und der Glieddichtfläche (33) ab.

Die Figur 1 zeigt einen auf dem Hohlprofil (10) provisorisch sitzenden Mediumsabnehmer (130). Er ist in Figur 2 teilweise im Längsschnitt und in Figur 3 im Querschnitt gezeigt. Der Mediumsabnehmer (130) besteht im Wesentlichen aus einem Übernahmegehäuse (131), das aus einem Gehäuseoberteil (132) und einem Gehäuseunterteil (133) besteht. Das z.B. quaderförmige Übernahmegehäuse (131) bildet ein, z.B. aus einer Aluminiumlegierung gefertigtes, montiertes Vierkantrohr, das das Hohlprofil (10) auf einer Länge vollständig umgibt, die mindestens dem vier- bis sechsfachen der Hohlprofilbreite entspricht. Die Höhe und die Breite des Übernahmegehäuses (131) entspricht im Ausführungsbeispiel dem zwei- bis 2,5-fachen der Hohlprofilbreite. Die reguläre Innenwandung (134) des Übernahmegehäuses (131) ist im Mittel z.B. überall 7,5 mm von der Außenwandung des Hohlprofils (10) beabstandet.

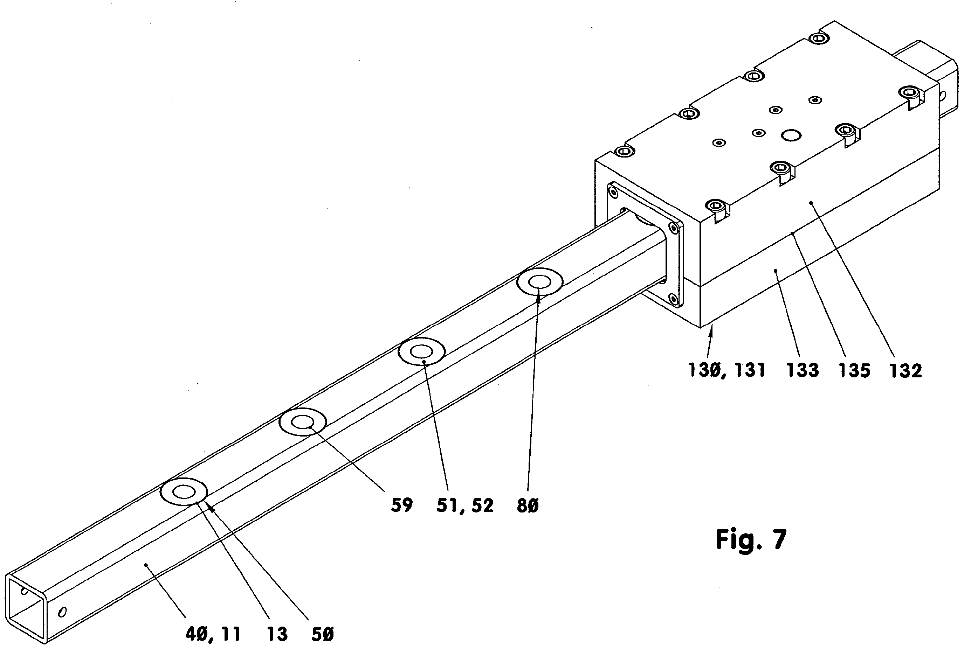

Zwischen dem Gehäuseoberteil (132) und dem Gehäuseunterteil (133) befindet sich eine ebene Montagefuge (135), vergleiche Figur 3, die unterhalb der Mitte des Hohlprofils (10) liegt. In die Montagefuge (135) ist eine Dichtschnurkerbe (136) eingearbeitet, in die ein Dichtmittel eingelegt oder eingespritzt wird. Das Gehäuseoberteil (132) und das Gehäuseunterteil (133) sind mittels acht Senkschrauben miteinander verschraubt, vgl. Figur 1 und 7.

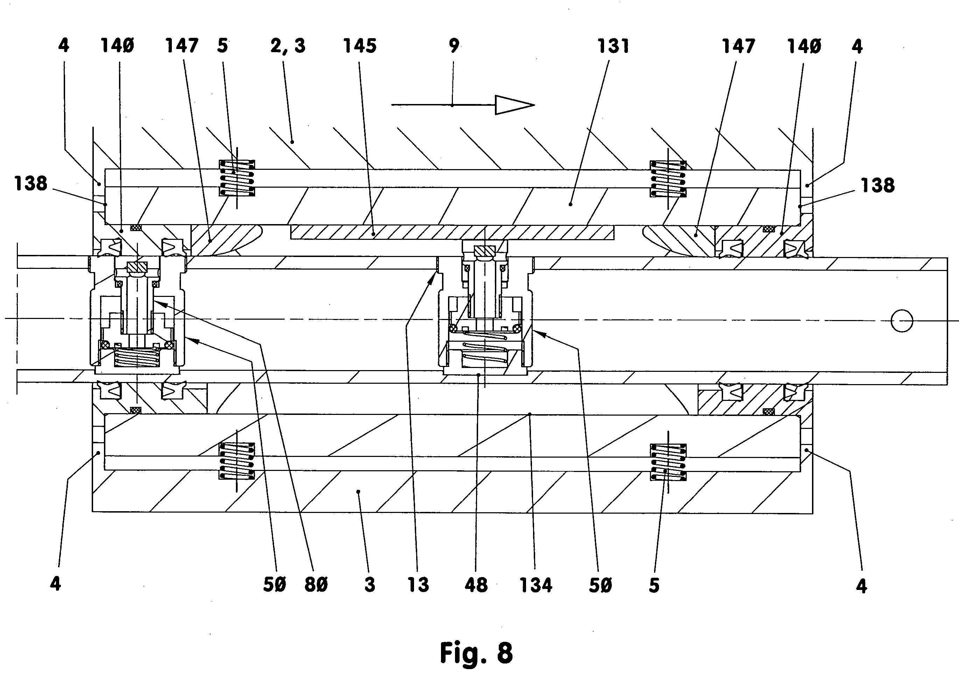

Am Gehäuseoberteil (132) befindet sich im linken Bereich ein Mediumsanschluss (139). Das Übernahmegehäuse (131) ist vorn und hinten mit einem Stirndeckel (140) verschlossen, vgl. Figuren 2 und 8. Dabei sitzt der z.B. einteilige Stirndeckel (140) zwischen der Innenwandung (134) des Übernahmegehäuses (131) und dem Hohlprofil (10). Der einzelne Stirndeckel (140) hat einen Stirndeckelflansch (141), mit dem er z.B. mit jeweils vier Schrauben an der jeweiligen Stirnseite des Mediumsabnehmers (130) befestigt ist. Der Stirndeckel (140) hat in dem Außenbereich, mit dem er in der Innenwandung (134) sitzt, eine O-Ringnut (142), in der ein Dichtring eingelegt ist. Er hat in seiner zentralen Deckelausnehmung (146) zwei parallel zueinander innenliegende, umlaufende Dichtringnuten (143), in die jeweils eine Lippendichtung (144) - mit z.B. zwei voneinander weg orientierte Dichtlippen - eingelegt ist.

Das Gehäuseoberteil (132), das Gebäuseunterteil (133), die Stirndeckel (140) und das Hohlprofil (10) umgeben gasdicht einen Übertragungshohlraum (137).

Zwischen dem Hohlprofil (10) und dem kleinsten Öffnungsquerschnitt eines jeden Stirndeckels befindet sich ein Spalt von 0,2 bis 0,4 mm. Im Ausführungsbeispiel zentrieren die vier Lippendichtungen (144) der beiden Stirndeckel (140) den Mediumsabnehmer (130) gegenüber dem Hohlprofil (10), ohne jedoch das Gewicht des Mediumsabnehmers (130) auf dem Hohlprofil (10) zu lagern.

Die Gewichtskraft des Mediumsabnehmers (130) wird von dem den Mediumsabnehmer (130) lagernden Transportwagen (2) aufgenommen, vgl. Figur 8. Der in der Regel an einer eigenen Führungsschiene gelagerte Transportwagen (2) weist z.B. einen Führungsrahmen (3) auf, der das Übernahmegehäuse (131) lagert. Quer zur Fahrtrichtung (9) stützt sich das Übernahmegehäuse (131) über mehrere Zentrierfedern (5) am Führungsrahmen (3) ab. In jeder der Normalenrichtungen der vier Seitenwandungen des Hohlprofils (10) ist mindestens eine Zentrierfeder (5) in Form einer Schraubendruckfeder angeordnet. In Fahrtrichtung (9) liegen die Stirnflächen (138) des Übernahmegehäuses (131) mit einem maximalen Spiel von 0,2 mm an den Anschlagflanschen (4) des Führungsrahmens (3) an.

Gemäß den Figuren 2, 3, 8 und 9 ist an der oberen Innenwandung des Gehäuseoberteils (132), gegenüber den Ventilen (20, 50), ein streifenförmiger Permanentmagnet (145) angeordnet. Der z.B. 12 mm breite Permanentmagnet (145), er ist mit dem Gehäuseoberteil verschraubt, vgl. Figur 1 und 7, hat eine Länge, die mindestens der halben Länge des Übernahmegehäuses (131) entspricht. Der direkt über den Ventilen (20, 50) sitzende Permanentmagnet (145) ragt genauso weit in den Übertragungshohlraum (137) hinein, dass die Ventile (20, 50) bei geöffnetem Ventilglied (30, 80) ihn noch nicht berühren. Das Luftspaltspiel beträgt in der Regel 0,1 mm. Zwischen dem Permanentmagnet (145) und dem jeweiligen Stirndeckel (140) ist eine mechanische, z.B. aus Kunststoff gefertigte Ventilschließrampe (147) angeordnet. Letztere hat beispielsweise eine Rampenfläche (148), deren Wandung bereichsweise der Krümmung eines Zylindermantelabschnitts entspricht, dessen Radius z.B. 24 mm misst. Der Radius läuft 2,5 mm vor dem Stirndeckel (140) in einer zum Hohlprofil (10) parallelen Tangente aus, die 0,1 bis 0,2 mm oberhalb der Wandung des Hohlprofils (10) liegt. Die Breite der Rampenfläche (148) entspricht der Breite des Permanentmagneten (145). Die den Ventilen (20, 50) zugewandte Rampenfläche (148) ist gegebenenfalls mit einer entsprechenden Oberflächenbeschichtung versehen, die diese Fläche mit einem besonders geringen Reibwert ausstattet.

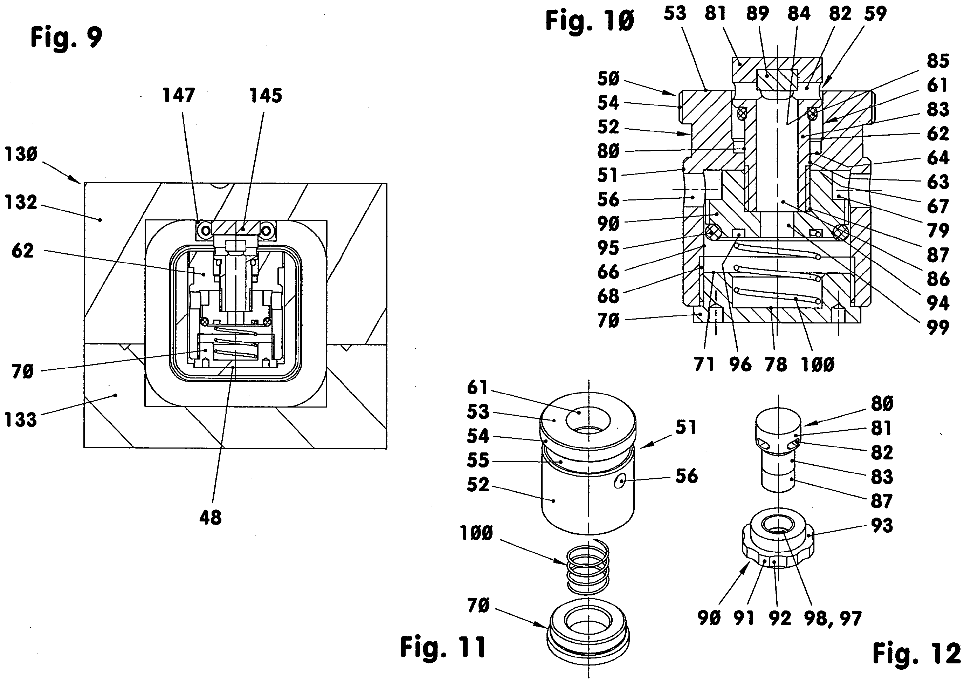

Die einzelne Ventilschließrampe (147) ist mit zwei Schrauben am jeweils nächstgelegenen Stirndeckel (140) befestigt, vgl. Figuren 3 und 9.

Überfährt beim Fahren des Transportwagens (2) der Mediumsabnehmer (130) mit seinem vorderen Stirndeckel ein Saugventil (20), wird dessen Vakuumventilglied (30) - aufgrund seines integrierten Saugventilmagneten (39) - durch den streifenförmigen Permanentmagnet (145) angezogen. Dadurch hebt das Vakuumventilglied (30) von der Sitzdichtfläche (28) der Ventilsitzhülse (21) ab. So breitet sich das Vakuum des Hohlprofils (10) in den Übertragungshohlraum (137) und von dort aus über den Medienanschluss (139) in den Transportwagen (2) aus.

Der Öffnungshub des Vakuumventilgliedes (30) ist durch seine Hintergriffshaken (37) begrenzt, sodass das Vakuumventilglied (30) den streifenförmigen Permanentmagnet (145) gerade noch nicht berührt. Die Anziehungskraft zwischen dem zylindrischen Saugventilmagnet (39) des Vakuumventilglieds (30) und dem streifenförmigen Permanentmagnet (145) des Mediumsabnehmers (130) reicht aus, um - trotz der Sogkraft der entlang des Vakuumventilglieds (30) in das Hohlprofil (10) strömenden Luft - offen zu bleiben.

Erreicht der Permanentmagnet (145) des Mediumsabnehmers (130) mit seinem Ende das Vakuumventilglied (30), gelangt die Ventilschließrampe (147) über das Vakuumventilglied (30). Deren Rampenfläche (148) drückt den Ventilteller (31) mechanisch in Schließrichtung des Saugventils (20). Überfährt der Stirndeckel (140) des Mediumsabnehmers (130) das Saugventil (20), befindet sich das Vakuumventilglied (30) wieder in seiner Schließstellung. Den Schließhub unterstützt hierbei das im Innenraum (19) des Hohlprofils (10) vorhandene Vakuum.

Anstelle der den Ventilteller (31) nur mechanisch führenden Ventilschließrampe (147) kann ein Permanentmagnet im Mediumsabnehmer (130) angeordnet sein, dessen Polung gegenüber der Polung des Saugventilmagneten (39) des Ventiltellers so gewählt wird, dass der Saugventilmagnet (39) abgestoßen wird. Der Permanentmagnet im Mediumsabnehmer (130) kann - wie auch der streifenförmige Permanentmagnet (145) - ein Elektromagnet sein.

Des Weiteren besteht die Möglichkeit, die Ventilschließrampe (147) durch ein oder mehrere Druckluftdüsen zu ersetzen, die zum Schließen des Saugventils (20) gegen dessen Ventilteller temporär Druckluft, z.B. stoßartig, ausstoßen, um so das Saugventil (20) zu schließen. Die hierzu erforderliche Druckluft stammt beispielsweise aus einem im Transportwagen (2) mitgeführten Druckluftspeicher.

Die Figuren 7 bis 12 zeigen ein Mediumsversorgungssystem, das mit einem Druckgas, z.B. Druckluft, arbeitet. Die Figur 7 zeigt als Mediumführprofil ein für Druckluft geeignetes Hohlprofil (10), auf dem der schon aus den Figuren 2 und 3 bekannte Mediumsabnehmer (130) aufgeschoben ist. Im hohlen Druckprofil (40) sind z.B. auf nur einer Seitenwandung eine Vielzahl von Druckventilen (50) angeordnet. Ein einzelnes Druckventil (50) ist in Figur 10 zusammengebaut dargestellt.

Das Druckventil (50) besteht aus einem zweiteiligen Druckventilgehäuse (51), einem mehrteiligen Druckventilglied (80) und einer Ventilfeder (100). Das Druckventilgehäuse (51), vgl. Figur 11, setzt sich aus einem Gehäusetopf (52) und einem Gehäuseschraubdeckel (70) zusammen. Der nach den Figuren 9 bis 11 auf dem Kopf stehende Gehäusetopf (52) hat oben einen planen Gehäuseboden (53), der nach dem Einbau im Druckprofil (40) mit dessen Außenwandung eben abschließt. Der größte Teil der radialen, zylindrischen Außenwandung des Gehäusetopfes (52) hat einen Durchmesser von z.B. 23 mm. Nur der z.B. 3,5 mm breite obere Bereich, der an den Gehäuseboden (53) anschließt, trägt ein Außengewinde (54) mit einem Außendurchmesser von z.B. 24 mm.

Der Gehäusetopf (52) weist von seiner Unterseite aus eine zentrale zylindrische z.B. 16,4 mm tiefe Einströmbohrung (66) auf, die in einem planen Boden endet. Der Durchmesser der Einströmbohrung (66) misst z.B. 18 mm. Der untere Bereich dieser Bohrung trägt ein Innengewinde (68), um dort den Gehäuseschraubdeckel (70) einschrauben zu können. In die Einströmbohrung (66) münden in der Nähe des Einströmbodens (67) dieser Bohrung mindestens zwei Zutrittsquerbohrungen (56).

In den Gehäuseboden (53) ist, nach Figur 10, von oben her eine zentrale Ausströmstufenbohrung (61) eingearbeitet. Diese mündet in die Einströmbohrung (66). Die Ausströmstufenbohrung (61) hat einen Kopfbereich (62) und einen Schaftbereich (63). Der Kopfbereich (62) hat einen Durchmesser von z.B. 11,2 mm. Er ist z.B. 10 mm tief. An den Kopfbereich (62) schließt sich über eine plane Ausströmdichtfläche (64) der schmale Schaftbereich (63) an. Letzterer hat nur einen Durchmesser von z.B. 8 mm.

In der Ausströmstufenbohrung (61) und in der Einströmbohrung (66) sitzt das an deren Wandungen geführte Druckventilglied (80). Das Druckventilglied (80) besteht aus einem Ventilkopf (81), einem Ventilschaft (83) und einem Ventilfuß (90). Der zwischen dem Ventilkopf (81) und dem Ventilfuß (90) angeordnete Ventilschaft (83) hat im unteren Bereich ein Außengewinde, auf das der Ventilfuß (90) aufgeschraubt ist. Der Ventilschaft (83) hat eine zentrale Ausströmlängsbohrung (86), die in zwei im Ventilkopf (81) angeordnete sich schneidende Ausströmquerbohrungen (82) mündet. Die einzelnen Ausströmquerbohrungen haben einen ovalen Querschnitt, wobei die Ovalenmittellinien in einer Ebene liegen, die normal zur Mittellinie des Druckventils (50) orientiert ist.

Im Ventilkopf (81) befindet sich oberhalb der ovalen Mittellinien der zentral angeordnete Druckventilmagnet (89). Der Durchmesser des Magneten ist geringfügig kleiner als der Durchmesser der Ausströmlängsbohrung (86), über die der Magnet im Ventilkopf eingesetzt wird.

An der Übergangsstelle zwischen dem Ventilkopf (81) und dem Ventilschaft (83) befindet sich eine Schaftringnut (84), in der ein Kopfdichtring (85) angeordnet ist. Letzterer dichtet bei geschlossenem Druckventil (50) den Übertragungshohlraum (137) gegenüber dem Innenraum (19) des Druckprofils (40) ab.

Der Ventilfuß (90) weist eine zentrale Fußstufenbohrung (97) auf, die im oberen Bereich aus einem Fußinnengewinde (98) zur Befestigung des Ventilfußes (90) am Fußgewinde (87) des Ventilschafts (83) besteht. Deruntere Bereich der Fußstufenbohrung (97) ist der Fußeinströmbereich (99).

Der Ventilfuß (90) weist außen einen Fußführungsbereich (91) mit Überströmkerben (92) und einen Luftverteilbereich (93) in Form einer Eindrehung auf. Der z.B. 3 mm breite Fußführungsbereich (91) führt das Druckventilglied (80) in der Einströmbohrung (66) mit einem Spiel von z.B. 0,1 mm. Die radialen Überströmkerben (92) des Fußführungsbereichs (91) geben in der Summe einen Querschnitt frei, der mindestens dem Querschnitt des Fußeinströmbereiches (99) entspricht. Zwischen dem Fußführungsbereich (91) und der unteren freien Stirnfläche des Ventilfu-ßes (90) befindet sich eine Fußringnut (94), die einen Fußdichtring (95) trägt. In der unteren freien Stirnfläche ist eine Planringnut (96) angeordnet, in der eine im Druckventilgehäuse (51) angeordnete Ventilfeder (100) radial geführt ist.

Der oberhalb des Fußführungsbereiches (91) liegende Luftverteilbereich (93) hat bei einer Höhe von 3,5 mm einen Durchmesser von z.B. 13,5 mm.

Der den Gehäusetopf (52) verschließende Gehäuseschraubdeckel (70) ist ein Flanschdeckel mit einer zentralen Federsitzeinsenkung (78). Der Außendurchmesser des Gehäuseschraubdeckels (70) beträgt 20 mm. Der Flansch hat eine Wandstärke von 2 mm. Die im Ventil (50) gelegene Stirnfläche des Gehäuseschraubdeckels (70) ist im montierten Druckventil (50) die Einströmdichtfläche (71). Auf ihr liegt bei geschlossenem Druckventil (50) der Fußdichtring (95) dichtend auf.

Die Ventilfeder (100), eine Schraubendruckfeder niedriger Federrate, ist im Druckventilgehäuse (51) zwischen der Federsitzeinsenkung (78) des Gehäuseschraubdeckels (70) und der Planringnut (96) des Druckventilglieds (80) eingebaut.

Zum Einbau des Druckventils (50) in das Druckprofil (40) weist Letzteres zum einen pro Druckventil (50) eine Ventileinbaubohrung (13) und ein Sitzsackloch (48) auf, vgl. Figur 8. Die Ventileinbaubohrung (13) weist ein Innengewinde auf, in das das Außengewinde (54) des Druckventilgehäuses (51) eingeschraubt wird. Das Sitzsackloch (48) liegt auf der Mittellinie der Ventileinbaubohrung (13). Es ist eine z.B. 1 mm tiefe Ausnehmung der Innenwandung des Druckprofils (40), die gegenüber der die Ventileinbaubohrung (13) tragenden Wandung angeordnet ist. Das Sitzsackloch (48) verbessert die Sitzstabilität des Druckventils (50). Es kann beispielsweise als Verklebungsfläche genutzt werden.

Die Figur 8 zeigt links ein gerade geschlossenes Druckventil (50). Das Druckventilglied (80) ist komplett eingefahren, sodass die freie Stirnfläche des Ventilkopfes (81) in einer Ebene mit der freien Stirnfläche des Gehäusetopfes (52) liegt und die Ventilfeder (100) komprimiert ist. Der Druckventilinnenraum (79) ist durch den Kopfdichtring (85) gegenüber der Umgebung des Druckprofils (40) abgedichtet. Die über die Zutrittsquerbohrungen (56) im Druckventilinnenraum (79) anstehende Druckluft hält das Druckventilglied (80) in der geschlossenen Stellung, da die innenliegende Stirnfläche des Ventilfußes (90) größer ist als der Bereich der unteren Stirnfläche des Ventilkopfes (81), an dem die Druckluft ansteht. Der Fußdichtring (95) hält dabei die pneumatische Verbindung zwischen dem Druckventilinnenraum (79) und dem Fußeinströmbereich (99) geschlossen.

Um das Druckventilglied (80) in einer definierten Schließstellung zu halten, kann die untere freie Stirnfläche des Ventilfu-ßes (90) - trotz des Fußdichtrings (95) - direkt auf der Stirnfläche des Gehäuseschraubdeckels (70) aufliegen.

Um das Druckventil (50) nur durch die Wechselwirkung zwischen Druckventilmagnet (89) und dem Permanentmagnet (145) des Mediumsabnehmers (130) öffnen zu können, wird der Ventilfuß (90) durch die Kraft der Ventilfeder (100) belastet, um so die Schließkraft nur geringfügig kleiner zu wählen als die erforderliche Ventilöffnungskraft. Die Summe aus der pneumatischen Schließkraft des Druckventilglieds (80) und der Druckventilschwerkraft wird durch die entgegengesetzt wirkende Ventilfederkraft soweit gemindert, dass das Druckventil (50) - ohne das Hinzukommen der in Öffnungsrichtung wirkenden Magnetkraft - geschlossen bleibt.

Wird das Druckventil (50) - entgegen den gezeigten Ausführungsbeispielen - in einer seitlichen oder unteren Wandung des Druckprofils (40) eingebaut, muss - je nach Druckventilempfindlichkeit - bei dem auf das Druckventilglied wirkenden Kräftegleichgewicht die Änderung der Druckventilschwerkraft berücksichtigt werden.

Gelangt beim Verfahren des Transportwagens (2) der Mediumsabnehmer (130) mit seinem streifenförmigen Permanentmagnet (145) über das Druckventil (50), wird das Druckventilglied (80) in seine Offenstellung gezogen und geschoben, vgl. Figur 10. Die Druckluft (1) aus dem Innenraum (19) des Druckprofils (40) gelangt über die Zutrittsquerbohrungen (56) in den Druckventilinnenraum (79). Von dort strömt sie entlang der Überströmkerben (92) vor die untere Stirnfläche des Ventilfußes (90), um durch den Fußeinströmbereich (99), die Ausströmlängsbohrung (86) und die Ausströmquerbohrungen (82) in den Übertragungshohlraum (137) zu gelangen.

Die Schließbewegung des Druckventils (50) erfolgt in gleicher Weise wie bei dem Saugventil (20). Alle Bauteile dieser Ventile (20, 50) sind aus Kunststoff gefertigt, um die magnetische Wirkung der Magnete (39, 59, 145) so wenig wie möglich zu schwächen.

Die Figuren 13 bis 15 zeigen skizzenhaft die Lagerung und die Vakuum- oder Druckgasversorgung des Mediumsversorgungssystems mit mindestens drei Lagerstellen (161 - 163). Bei der dargestellten Ausführungsform ist das Mediumführprofil (10, 40) beidseitig mittels der in Figur 6 dargestellten Überfahrkappe (120) verschlossen. In den Bereichen der Überfahrkappen (120) ist vor und hinter dem Mediumführprofil (10, 40) als Lagerstelle (161, 163) jeweils ein Versorgungsarm (165, 166) angeordnet. Jeder Versorgungsarm (165, 166) lagert dazu in einem Versorgungschwenklager (167). In jedem Versorgungschwenklager (167) ist neben einer Schwenkvorrichtung, z.B. einem pneumatischen Schwenkmotor, ein Mediumsanschluss untergebracht. Jede Schwenkvorrichtung hat hier einen Schwenkbereich von 90 Winkelgraden.

Nach Figur 13 ist der Startpunktversorgungsarm (165) nach links weggeschwenkt, um dem Mediumsabnehmer (130) die Gelegenheit zu geben, über die Überfahrkappe (120) auf das Mediumführprofil (10, 40) aufzufahren. Um beim Wegschwenken des Startpunktversorgungsarms (165) das Mediumführprofil (10, 40) dicht gegenüber der Umgebung zu verschließen, befindet sich in jeder Überfahrkappe (120), unmittelbar hinter dem Mediumsanschluss (139), ein Rückschlagventil. Letzteres, schließt z.B. bei einem Druckprofil (40) sofort, sobald der Startpunktversorgungsarm (165) von der Überfahrkappe (120) wegschwenkt.

Nachdem der Mediumsabnehmer (130) auf das Mediumführprofil (10, 40) aufgefahren ist, wird der Startpunktversorgungsarm (165) mit einer Schwenkbewegung im Uhrzeigerdrehsinn wieder gegen die Überfahrkappe (120) geschwenkt, um nach dem Öffnen des Rückschlagventils das Mediumführprofil wieder mit Druckluft zu versorgen. Um das Weiterfahren des den Mediumsabnehmer (130) tragenden Transportwagens (2) zu ermöglichen, wird in der zweiten Lagerstelle (162) eine - das Mediumführprofil (10, 40) z.B. mittig stützende - Zwischenschwenkstütze (171) in ihrem Stützschwenklager (172) im Uhrzeigersinn aus dem Weg geklappt. Sobald der Mediumsabnehmer (130) die Zwischenschwenkstütze (171) passiert hat, klappt sie wieder in ihre Ausgangslage zurück.

Die Zwischenschwenkstütze (171) kann beispielsweise mit einer pneumatischen Klemmvorrichtung ausgestattet werden, deren Klemmbacken das Mediumführprofil (10, 40) beidseitig klemmend umgreifen, um so auch in Längsrichtung des Mediumführprofils (10, 40) wirkende Kräfte zusätzlich abstützen zu können. Bei dieser Ausführungsvariante wird das Stützschwenklager (172) durch ein Versorgungschwenklager (167) ersetzt.

Kurz bevor der Mediumsabnehmer (130) das rechte Ende des Mediumführprofils (10, 40) erreicht, wird der Endpunktversorgungsarm (166) durch sein Versorgungschwenklager (167) - mit Unterbrechung der dortigen Mediumszufuhr - im Uhrzeigerdrehsinn aus dem Weg geschwenkt, sodass der Mediumsabnehmer (130) ungestört das Mediumführprofil verlassen kann. Unmittelbar nachdem der Mediumsabnehmer die Lagerstelle (163) passiert hat, schwenkt der Endpunktversorgungsarm (166) wieder in seine Ausgangslage zurück, um das Mediumführprofil (10, 40) - z.B. wieder mit Druckluft - zu versorgen.

Mit dieser Vakuum- oder Druckgasversorgung wird im Innenraum des Mediumführprofils (10, 40) der gewünschte Gasdruck aufrechterhalten, obwohl ständig Mediumsabnehmer (130) auf das Mediumführprofil auffahren oder dieses wieder verlassen.

Kombinationen der in den Figuren 1 bis 12 gezeigten Ausführungsbeispiele sind denkbar.

### Bezugszeichenliste:

- 1: Medium, gasförmig oder flüssig; Druckluft, Vakuum
- 2: Transportwagen
- 3: Führungsrahmen
- 4: Anschlagflansche, Anschläge
- 5: Zentrierfedern, Schraubenfedern
- 9: Fahrtrichtung des Transportwagens oder des Werkstücks

- 10: Hohlprofil, Saugprofil, Mediumführprofil
- 11: Vierkantrohr
- 12: Längskanten
- 13: Ventileinbaubohrung
- 19: Innenraum

- 20: Saugventil, Ventil
- 21: Ventilsitzhülse
- 22: Befestigungsbereich
- 23: Führungsbereich
- 24: Haltestirnfläche

- 26: Ausnehmung
- 27: Konusfläche
- 28: Sitzdichtfläche
- 29: Öffnung

- 30: Vakuumventilglied
- 31: Ventilteller
- 32: Zentrierfläche, konisch
- 33: Glieddichtfläche, plan
- 34: Umlaufnut
- 35: Magnethaltebüchse, zentral
- 36: Führungselemente
- 37: Hintergriffshaken, nach außenragend
- 38: Dichtring, O-Ring
- 39: Saugventilmagnet

- 40: Druckprofil, Hohlprofil, Mediumführprofil
- 48: Sitzsackloch

- 50: Druckventil, Ventil
- 51: Druckventilgehäuse
- 52: Gehäusetopf
- 53: Gehäuseboden, plan
- 54: Außengewinde
- 55: Einstich
- 56: Zutrittsquerbohrungen
- 59: Öffnung

- 61: Ausströmstufenbohrung
- 62: Kopfbereich
- 63: Schaftbereich
- 64: Ausströmdichtfläche

- 66: Einströmbohrung
- 67: Einströmboden
- 68: Innengewinde

- 70: Gehäuseschraubdeckel
- 71: Einströmdichtfläche
- 78: Federsitzeinsenkung
- 79: Druckventilinnenraum

- 80: Druckventilglied
- 81: Ventilkopf
- 82: Ausströmquerbohrungen
- 83: Ventilschaft
- 84: Schaftringnut
- 85: Kopfdichtring
- 86: Ausströmlängsbohrung
- 87: Fußgewinde
- 89: Druckventilmagnet

- 90: Ventilfuß
- 91: Fußführungsbereich
- 92: Überströmkerben
- 93: Luftverteilbereich
- 94: Fußringnut
- 95: Fußdichtring
- 96: Planringnut
- 97: Fußstufenbohrung
- 98: Fußinnengewinde
- 99: Fußeinströmbereich
- 100: Ventilfeder

- 110: Verschlusskappe, außensitzend, topfförmig
- 111: Kappenausnehmung
- 112: O-Ringnuten, innen
- 113: O-Ringe
- 115: Mediumsanschluss, zentral, Gewindebohrung
- 116: Gewindebohrungen
- 117: Gewindestifte mit Spitze

- 120: Überfahrkappe, innensitzend
- 121: Pyramidenstumpfbereich
- 122: Sitzbereich
- 123: O-Ringnuten, außen
- 124: Zentralbohrung
- 125: Mediumsanschluss, zentral, Gewindebohrung
- 127: Gewindestifte, Passstifte

- 130: Mediumsabnehmer
- 131: Übernahmegehäuse
- 132: Gehäuseoberteil
- 133: Gehäuseunterteil
- 134: Innenwandung
- 135: Montagefuge
- 136: Dichtschnurkerbe
- 137: Übertragungshohlraum
- 138: Stirnflächen
- 139: Mediumsanschluss

- 140: Stirndeckel
- 141: Stirndeckelflansch
- 142: O-Ringnut, außen
- 143: Dichtringnuten, innen
- 144: Lippendichtungen
- 145: Magnet, streifenförmig, Permanentmagnet, Elektromagnet, Mittel
- 146: Deckelausnehmung, zentral
- 147: Ventilschließrampe
- 148: Rampenfläche

- 161 - 163: Lagerstellen
- 165: Startpunktversorgungsarm, Versorgungsarm
- 166: Endpunktversorgungsarm, Versorgungsarm
- 167: Versorgungsschwenklager
- 171: Zwischenschwenkstütze
- 172: Stützschwenklager

## Patentansprüche

1. Mediumsversorgungssystem mit mindestens einem ortsfest gelagerten, ein gasförmiges oder flüssiges Medium (1) führendes Hohlprofil (10, 40) und einem schienengeführten mit einem Mediumsabnehmer (130) ausgestatteten Transportwagen (2),
- wobei der am Hohlprofil (10, 40) zumindest bereichsweise anliegende Mediumsabnehmer (130) an diesem entlangführbar ist,
- wobei zwischen dem Mediumsabnehmer (130) und dem Hohlprofil (10, 40) ein geschlossener Übertragungshohlraum (137) vorhanden ist,
- wobei der Mediumsabnehmer (130) das im Hohlprofil (10, 40) vorhandene Medium über im Hohlprofil (10, 40) angeordnete Ventile (20, 50) übernimmt,
- wobei in den Übertragungshohlraum (137) des Mediumsabnehmers (130) die Öffnung (29, 59) mindestens eines Ventils (20, 50) mündet,
- wobei das jeweils vom Mediumsabnehmer (130) überfahrene Ventil (20, 50) magnetisch ausgelöst öffenbar ist und
- wobei das überfahrene, geöffnete Ventil (20, 50) beim Verlassen des Übertragungshohlraums (137) mechanisch, pneumatisch oder magnetisch ausgelöst schließbar ist,
**dadurch gekennzeichnet, dass** der Mediumsabnehmer (130) ein den Querschnitt des Hohlprofils (10, 40)umgebendes den Übertragungshohlraum (137) aufnehmendes Übernahmegehäuse hat, das an seinen vom Hohlprofil (10, 40) durchdrungenen Stirnseiten gleitfähig mediumsdicht verschlossen ist.

2. Mediumsversorgungssystem gemäß Anspruch 1, **dadurch gekennzeichnet, dass** im Mediumsabnehmer (130) mindestens ein Magnet (145) oder eine Gruppe von Magneten zum Öffnen der Ventile (20, 50) angeordnet ist, wobei der oder die Magnete permanent oder elektrisch erregt sind, während die Ventile (20, 50) magnetisches oder magnetisierbares Material beinhalten.

3. Mediumsversorgungssystem gemäß Anspruch 1, **dadurch gekennzeichnet, dass** das Hohlprofil (10, 40) ein Vierkantrohr mit abgerundeten Längskanten (12) ist.

4. Mediumsversorgungssystem gemäß Anspruch 1, **dadurch gekennzeichnet, dass** im Übernahmegehäuse (131) Mittel (145) angeordnet sind, die das Schließen der Ventile (20, 50) bewirken.

5. Mediumsversorgungssystem gemäß Anspruch 1, **dadurch gekennzeichnet, dass** das Hohlprofil (10) ein druckluftführendes Druckprofil ist und das einzelne Ventil (50) ein Druckventil ist.

6. Mediumsversorgungssystem gemäß Anspruch 5, **dadurch gekennzeichnet, dass** das Druckventil (50) ein Druckventilglied (80) aufweist, dessen Schließkraft mittels einer Ventilfeder (100) begrenzt ist.

7. Mediumsversorgungssystem gemäß Anspruch 1, **dadurch gekennzeichnet, dass** das Hohlprofil (10) ein Vakuum führendes Saugprofil ist und das einzelne Ventil (20) ein Saugventil ist.

8. Mediumsversorgungssystem gemäß Anspruch 1, **dadurch gekennzeichnet, dass** das Hohlprofil (10, 40) an mindestens drei Lagerstellen (161 - 163) ortsfest gelagert ist, wobei mindestens zwei Lagerstellen (161, 163) aus einer Schwenkvorrichtung (167) und einem Versorgungsarm (165, 166) bestehen, während alle weiteren Lagerstellen (162) anstelle eines Versorgungsarmes (165, 166) eine Zwischenstütze (171) aufweisen.

9. Mediumsversorgungssystem gemäß Anspruch 8, **dadurch gekennzeichnet, dass** immer nur ein Versorgungsarm (165, 166) oder eine Zwischenstütze (171) nicht am Tragen des Hohlprofils (10, 40) beteiligt ist.

## Claims

1. A medium supply system with at least one stationarily mounted hollow profile (10, 40) that conducts a gaseous or liquid medium (1) and a rail-guided transport carriage (2) that is equipped with a medium consumer (130),
- wherein the medium consumer (130), which at least sectionally abuts on the hollow profile (10, 40), can be guided along this hollow profile,
- wherein a closed transfer cavity (137) is formed between the medium consumer (130) and the hollow profile (10, 40),
- wherein the medium consumer (130) receives the medium present in the hollow profile (10, 40) via valves (20, 50) arranged in the hollow profile (10, 40),
- wherein the opening (29, 59) of at least one valve (20, 50) leads into the transfer cavity (137) of the medium consumer (130),
- wherein the respective valve (20, 50) being overrun by the medium consumer (130) can be opened in a magnetically triggered manner, and
- wherein the opened valve (20, 50) being overrun can be closed mechanically, pneumatically or in a magnetically triggered manner upon leaving the transfer cavity (137),
**characterized in that** the medium consumer (130) has a transfer housing that encloses the cross section of the hollow profile (10, 40) and contains the transfer cavity (137), wherein said transfer housing is tightly sealed relative to the medium in a slidable manner on its end faces penetrated by the hollow profile (10, 40) .

2. The medium supply system according to claim 1, **characterized in that** at least one magnet (145) or a group of magnets for opening the valves (20, 50) is arranged in the medium consumer (130), wherein the magnet or the magnets are permanently or electrically excited whereas the valves (20, 50) contain magnetic or magnetizable material.

3. The medium supply system according to claim 1, **characterized in that** the hollow profile (10, 40) is a square pipe with rounded longitudinal edges (12).

4. The medium supply system according to claim 1, **characterized in that** means (145) for causing the valves (20, 50) to close are arranged in the transfer housing (131).

5. The medium supply system according to claim 1, **characterized in that** the hollow profile (10) is a pressure profile conducting compressed air and the individual valve (50) is a pressure valve.

6. The medium supply system according to claim 5, **characterized in that** the pressure valve (50) has a pressure valve element (80), the closing force of which is limited by means of a valve spring (100).

7. The medium supply system according to claim 1, **characterized in that** the hollow profile (10) is a suction profile conducting a vacuum and the individual valve (20) is a suction valve.

8. The medium supply system according to claim 1, **characterized in that** the hollow profile (10, 40) is stationarily mounted on at least three bearing points (161-163), wherein at least two bearing points (161, 163) consist of a pivoting device (167) and a supply arm (165, 166) whereas all other bearing points (162) have an intermediate support (171) instead of a supply arm (165, 166).

9. The medium supply system according to claim 8, **characterized in that** only one supply arm (165, 166) or one intermediate support (171) does not participate in supporting the hollow profile (10, 40) at all times.

## Revendications

1. Système d'alimentation de fluides, pourvu d'au moins un profilé creux (10, 40) logé de manière stationnaire, conduisant un fluide (1) gazeux ou liquide et d'un chariot de transport (2) guidé sur des rails, équipé d'un receveur de fluide (130),
- le receveur de fluide (130) adjacent au moins par zones au profilé creux (10, 40) étant susceptible d'être guidé le long de celui-ci,
- entre le receveur de fluide (130) et le profilé creux (10, 40) étant présente une cavité de transmission (137) fermée,
- le receveur de fluide (130) reprenant le fluide présent dans le profilé creux (10, 40) par l'intermédiaire de soupapes (20, 50) placées dans le profilé creux (10, 40),
- dans la cavité de transmission (137) du receveur de fluide (130) débouchant l'orifice (29, 59) d'au moins une soupape (20, 50),
- la soupape (20, 50) respectivement franchie par le receveur de fluide (130) étant susceptible de s'ouvrir par déclenchement magnétique et
- en quittant la cavité de transmission (137), la soupape (20, 50) ouverte franchie étant susceptible de se fermer par voie mécanique, pneumatique ou magnétique,
**caractérisé en ce que** le receveur de fluide (130) possède un boîtier de reprise entourant la section transversale du profilé creux (10, 40), recevant la cavité de transmission (137), qui sur ses faces frontales traversées par le profilé creux (10, 40) est fermé de manière coulissante en étant étanche au fluide.

2. Système d'alimentation de fluides selon la revendication 1, **caractérisé en ce que** dans le receveur de fluide (130) est placé au moins un aimant (145) ou un groupe d'aimants destiné à ouvrir les soupapes (20, 50), le ou les aimants étant excités de manière permanente ou par voie électrique, alors que les soupapes (20, 50) contiennent une matière magnétique ou magnétisable.

3. Système d'alimentation de fluides selon la revendication 1, **caractérisé en ce que** le profilé creux (10, 40) est un tube carré, doté d'arêtes longitudinales (12) arrondies.

4. Système d'alimentation de fluides selon la revendication 1, **caractérisé en ce que** dans le boîtier de reprise (131) sont placés des moyens (145) provoquant la fermeture des soupapes (20, 50).

5. Système d'alimentation de fluides selon la revendication 1, **caractérisé en ce que** le profilé creux (10) est un profilé de pression conduisant de l'air comprimé et **en ce que** la soupape (50) individuelle est une soupape de refoulement.

6. Système d'alimentation de fluides selon la revendication 5, **caractérisé en ce que** la soupape de refoulement (50) comporte un élément (80) de soupape de refoulement dont la force de fermeture est limitée au moyen d'un ressort de soupape (100).

7. Système d'alimentation de fluides selon la revendication 1, **caractérisé en ce que** le profilé creux (10) est un profilé d'aspiration conduisant un vide et **en ce que** la soupape (20) individuelle est une soupape d'aspiration.

8. Système d'alimentation de fluides selon la revendication 1, **caractérisé en ce que** le profilé creux (10, 40) est logé de manière stationnaire sur au moins trois points d'appui (161 à 163), au moins deux points d'appui (161, 163) étant constitués d'un dispositif de pivotement (167) et d'un bras d'alimentation (165, 166), alors que tous les autres points d'appui (162) comportent en remplacement d'un bras d'alimentation (165, 166) un support intermédiaire (171).

9. Système d'alimentation de fluides selon la revendication 8, **caractérisé en ce que** toujours un seul bras d'alimentation (165, 166) ou un support intermédiaire (171) ne contribuent pas à porter le profilé creux (10, 40).
